# EUROPEAN PATENT APPLICATION

(11) **EP 2 863 343 A1**
(43) Date of publication of application: **22.04.2015**
(21) Application number: 14185800.1
(22) Date of filing: 22.09.2014
(51) Int. Cl.: G06Q 10/00

(54) **User terminal device, information providing system, and method for providing information**

(30) Priority: 16.10.2013 KR 20130123104
(71) Applicant: Samsung Electronics Co., Ltd, Gyeonggi-do 443-742 (KR)
(72) Inventor: Won, Young-min, Gyeonggi-do (KR); Yoon, Seung-hyun, Gyeonggi-do (KR); Kwon, O-hoon, Gyeonggi-do (KR); Kim, Mun-jo, Gyeonggi-do (KR); Oh, Hyung-rai, Gyeonggi-do (KR); Lee, Si-jun, Gyeonggi-do (KR); Cha, Soon-back, Gyeonggi-do (KR)
(74) Representative: Appleyard Lees

(57) **Abstract**

A user terminal device, an information providing system, and a method of providing information thereof are provided. The method for providing information in a user terminal device includes registering contact information in an address list according to a user's input, transmitting an event of registering the contact information to an external server, in response to profile information which corresponds to the contact information being received from the server, storing contact information registered in the address list and the profile information in association with each other, and in response to a display item which corresponds to the contact information being selected while the address list is displayed, displaying the profile information.

## Description

### CROSS-REFERENCE TO RELATED APPLICATIONS

This application claims priority from Korean Patent Application No. 10-2013-0123104, filed in the Korean Intellectual Property Office on October 16, 2013, the disclosure of which is incorporated herein by reference, in its entirety.

### BACKGROUND

### 1. Technical Field

Aspects of the exemplary embodiments relate to a user terminal device, an information providing system, and a method for providing information thereof. More particularly, the exemplary embodiments relate to a user terminal device which provides profile information corresponding to contact information, an information providing system, and a method for providing information.

### 2. Description of the Related Art

With the ongoing development of communication technology, a user terminal device which is capable of providing various functions has been increasingly used. Such a user terminal device includes a list of address where contact information related to other user terminal devices are stored.

In the case of a user terminal device of the related art, a user should register the contact information of other user terminal devices, in person. Thus, the user typically stores only simple profile information of other user terminal devices such as a telephone number, and does not store other detailed profile information such as an e-mail address, etc. In other words, detailed profile information needs to be input by the user one by one, which causes inconvenience to the user.

Further, there may be a need to provide more detailed profile information in addition to providing simple contact information, on the part of the information provider. In particular, in response to an information provider wishing to provide such information for business purposes, the provider would like to provide more information than just contact information. For example, in response to an information provider being a car sales person, the person would like to provide not only his or her contact information, such as a telephone number, but would also want to provide other various information such as car information, car sales information, a photo of the car, and the location of car sales agency.

Accordingly, a method of more conveniently and easily providing various types of profile information to a user terminal device is required.

### SUMMARY

An aspect of the exemplary embodiments relates to a user terminal device which is capable of more conveniently and easily providing profile information related to a user who uses other user terminal devices, an information providing system, and a method of providing the profile information.

A method of providing information in a user terminal device according to an exemplary embodiment includes registering contact information in an address list according to a user's input, transmitting an event of registering the contact information to an external server, in response to profile information which corresponds to the contact information being received from the server, storing contact information registered in the address list and profile information in association with each other, and in response to a display item which corresponds to the contact information is selected while the address list is displayed, displaying the profile information.

The method may further include receiving the new profile information from the server, and updating the pre-stored profile information to the new profile information in response to a user corresponding to the contact information updating new profile information in the server.

The displaying may include displaying a UI to another user to recommend contact information which corresponds to the profile information.

The profile information may include at least one of information related to a user which corresponds to the contact information, another contact information related to a user which corresponds to the contact information, location information related to a user which corresponds to the contact information, image information related to a user which corresponds to the contact information, and estimation information related to a user which corresponds to the contact information.

The contact information may be at least one of a telephone number, an e-mail address and address information.

A user terminal device according to an exemplary embodiment includes a communicator configured to perform communication with an external server, a storage configured to store contact information, a display configured to display an image, an input unit configured to display a user command, and a controller configured to control the communicator to transmit an event of registering the contact information to an external server when contact information is registered in an address list according to a user's input which is input through the input unit, in response to profile information which corresponds to the contact information being received through the communicator, control the storage to store contact information registered in the address list and the profile information in association with each other, and control the display to display the profile information in response to a display item which corresponds to the contact information being selected while the address list is displayed.

The controller may control the communicator to receive the new profile information from the server and control the storage to update the pre-stored profile information to the new profile information in response to a user corresponding to the contact information updating new profile information in the server.

The controller may control the display to further display a UI to another user to recommend contact information which corresponds to the profile information of.

The profile information may include at least one of information related to a user which corresponds to the contact information, another contact information related to a user which corresponds to the contact information, location information related to a user which corresponds to the contact information, and image information related to a user which corresponds to the contact information.

The contact information may be at least one of a telephone number, an e-mail address and address information.

A method of providing information in an information providing system according to an exemplary embodiment includes uploading profile information in a server by a first user terminal device, registering contact information which corresponds to the first user terminal device in an address list according to a user's input by the second user terminal device, transmitting an event of registering contact information which corresponds to the first user terminal device to an external server by the second user terminal device, searching whether there is profile information which corresponds to contact information corresponding to the first user terminal device by the server, transmitting searched profile information to the second user terminal device by the server, storing contact information which corresponds to the first user terminal device and the profile information in association with each other by the second user terminal device, and in response to contact information which corresponds to the first user terminal device being selected, displaying the profile information by the second user terminal device.

The method may further include uploading new profile information in a server by the first user terminal device, transmitting new profile information to the second user terminal device by the server, and storing the new profile information and contact information which corresponds to the first user terminal device in association with each other by the second user terminal device.

The profile information uploaded by the first user terminal device may include contact information, and the searching may include searching whether there is profile information which corresponds to contact information corresponding to the first user terminal device.

The displaying may include displaying the profile information in response to contact information which corresponds to the first user terminal device being selected while the address list menu is selected.

The profile information may include at least one of information related to a user which corresponds to the contact information, another contact information related to a user which corresponds to the contact information, location information of a user which corresponds to the contact information, and image information related to a user which corresponds to the contact information, and the contact information may be at least one of a telephone number, an e-mail address and address information.

An aspect of an exemplary embodiment may provide a user terminal device, including: an input unit configured to display a user command; and a controller configured to control a communicator to transmit an event of registering contact information to an external server in response to contact information being registered in an address list according to a user's input which is input through the input unit, control storing of contact information registered in the address list and profile information in association with each other in response to profile information which corresponds to the contact information being received through the communicator, and control a display to display the profile information in response to a display item which corresponds to the contact information being selected while the address list is displayed.

The user terminal device may further include a communicator configured to perform communication with an external server.

The user terminal device may further include a storage configured to store contact information.

The user terminal device may further include a display configured to display an image.

The controller may be configured to control the display to further display a UI to recommend to another user contact information which corresponds to the profile information.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a view which illustrates an information providing system according to an exemplary embodiment;
FIG. 2 is a block diagram which illustrates a configuration of a user terminal device according to an exemplary embodiment;
FIGS. 3A to 3C are views which illustrate a user interface (UI) for registering profile information according to an exemplary embodiment;
FIGS. 4A to 4E are views which illustrate a UI for receiving profile information according to an exemplary embodiment;
FIG. 5 is a block diagram which illustrates a configuration of a server according to an exemplary embodiment;
FIG. 6 is a flowchart provided to explain a method of providing information related to a user terminal device according to an exemplary embodiment; and
FIG. 7 is a sequence view provided to explain a method of providing information related to an information providing system according to an exemplary embodiment.

### DETAILED DESCRIPTION OF THE EXEMPLARY EMBODIMENTS

It should be observed that the method steps and system components have been represented by conventional symbols in the figure, showing only specific details which are relevant for an understanding of the exemplary embodiments. Further, details readily apparent to persons of ordinary skill in the art may not have been disclosed. In the exemplary embodiments, relational terms such as first and second, and the like, may be used to distinguish one entity from another entity, without necessarily implying any actual relationship or order between such entities.

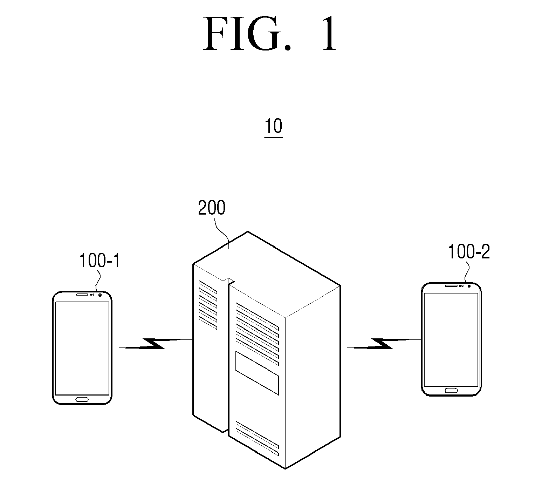

FIG. 1 is a view which illustrates an information providing system according to an exemplary embodiment. As illustrated in FIG. 1, an information providing system 10 includes a first user terminal device 100-1, a server 200, and a second user terminal device 100-2. The first user terminal device 100 may be a smart phone as illustrated in FIG. 1, but this is only an example. The user terminal device 100 may be implemented as various electronic devices, such as a desktop PC, a notebook PC, a tablet PC, a smart television, a mobile phone, etc.

The first user terminal device 100-1 receives a user command to register profile information of a user. In this case, the first user terminal device 100-1 may receive user profile information using a UI.

In response to a user command to register user profile information being input, the first user terminal device 100-1 may transmit the user profile information to the server 200.

The server 200 matches the user profile information received from the first user terminal device 100-1 with contact information of the first user terminal device 100-1 and stores the matching information.

In response to a user command to register contact information of the first user terminal device 100-1 in an address list of the second user terminal device 100-2 being input, the second user terminal device 100-2 transmits an event of registering the contact information of the first user terminal device 100-1 to the server 200.

In response to the event of registering the contact information of the first user terminal device 100-1 being transmitted to the server 200, the server 200 searches whether there is profile information which is matched with the contact information included in the registered event.

In response to profile information which is matched with the contact information being included in the registered event, the server 200 transmits the profile information of a user of the first user terminal device 100-1 to the second user terminal device 100-2.

The second user terminal device 100-2 stores the profile information of the user of the first user terminal device 100-1 in association with contact information of the first user terminal device 100-1.

In response to a display item which corresponds to the contact information of the first user terminal device 100-1 being selected while the address list is displayed, the second user terminal device 100-2 may display the profile information received from the server 200.

In response to the user of the first user terminal device 100-1 changing or adding profile information, the first user terminal device 100-1 transmits an event of updating profile information to the server 200. In this case, the event of updating profile information may include updating information regarding the profile information.

In response to the event of updating profile information being received from the first user terminal device 100-1, the server 200 updates profile information which is matched and stored with the contact information of the first user terminal device 100-1 and transmits the updated profile information to the second user terminal device 100-2.

The second user terminal device 100-2 stores the updated profile information in association with the contact information.

As described above, according to the information providing system, a user of the second user terminal device 100-2 may easily and conveniently acquire information regarding a user which corresponds to contact information. In addition, the user of the first user terminal device 100-1 which provides the contact information may also provide its own profile information to others more easily and conveniently, for the purposes of advertisement and promotion.

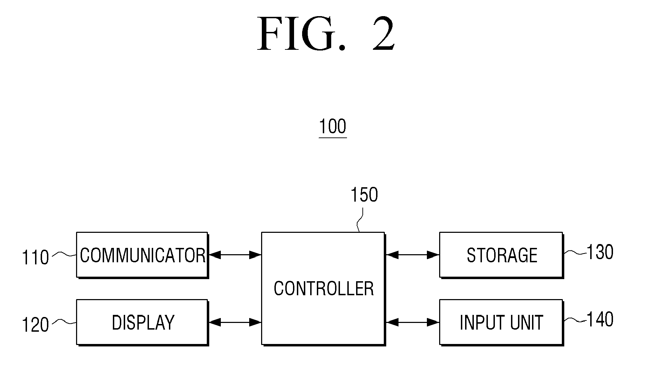

Hereinafter, the user terminal device 100 will be described in greater detail with reference to FIGS. 2 to 4E. FIG. 2 is a block diagram which illustrates a configuration of the user terminal device 100 according to an exemplary embodiment. As illustrated in FIG. 2, the user terminal device 100 includes a communicator 110, a display 120, a storage 130, an input unit 140, e.g., a user input, but is not limited thereto, and a controller 150.

FIG. 2 illustrates various components comprehensively, assuming that the user terminal device 100 is an apparatus having various functions, such as a communication function and a display function. Accordingly, depending on exemplary embodiments, a part of the components illustrated in FIG. 2 may be omitted or changed, or other components may be further added.

The communicator 110 communicates with various types of external apparatuses or an external server according to various types of communication methods. The communicator 110 may include various communication chips such as a WiFi chip, a Bluetooth® chip, a Near Field Communication (NFC) chip, a wireless communication chip, and so on. In this case, the WiFi chip, the Bluetooth® chip, and the NFC chip perform communication according to a WiFi method, a Bluetooth® method, and an NFC method, respectively. Among the above chips, the NFC chip represents a chip which operates according to an NFC method which uses 13.56MHz band among various RF-ID frequency bands such as 135kHz, 13.56MHz, 433MHz, 860~960MHz, 2.45GHz, and so on. In the case of the WiFi chip or the Bluetooth® chip, various connection information such as SSID and a session key may be transmitted/received first for communication connection and then, various information may be transmitted/received. The wireless communication chip represents a chip which performs communication according to various communication standards such as IEEE®, Zigbee®, 3^{rd} Generation (3G), 3^{rd} Generation Partnership Project (3GPP), Long Term Evolution (LTE) and so on.

In particular, the communicator 110 may perform communication with the external server 200. Specifically, the communicator 110 may upload profile information related to a user of the external server 200, and may receive profile information related to other users from the external server 200.

In addition, the communicator 110 may transmit to the external server 200 an event of registering contact information or an event of updating profile information.

The display 120 may output various image data under the control of the controller 150. In particular, the display 120 may display at least one of an address list UI, a contact registration UI, and a profile information UI.

The storage 130 stores various modules to operate the user terminal device 100. For example, the storage 130 may store software which includes a base module, a sensing module, a communication module, a presentation module, a web browser module, and a service module. In this case, the base module refers to a basic module which processes a signal transmitted from each hardware device included in the electronic apparatus 200 and transmits the processed signal to au upper layer module. The sensing module refers to a module which collects information from various sensors and analyzes and manages the collected information, and may include a face recognition module, a voice recognition module, a motion recognition module, an NFC recognition module, and so on. The presentation module refers to a module which configures a display screen, and may include a multimedia module to reproduce and output multimedia contents, and a UI rendering module which performs UI and graphic processing. The communication module refers to a module to perform communication with devices outside the apparatus. The web browser module refers to a module which access a web server by performing web-browsing. The service module refers to a module which includes various applications to provide various services.

In addition, the storage 130 may store address list information which includes contact information related to a plurality of users. The storage 130 may store profile information received from the server 200 in association with contact information.

The input unit 140 receives a user command to control overall operations of the user terminal device 100. In particular, the input unit 140 may receive a user command to register contact information and profile information.

The input unit 140 may be implemented as a touch panel, but this is only an example. The input unit 140 may be implemented as other input apparatuses to control the user terminal device 100, such as remote controller, pointing device, mouse and keyboard.

The controller 150 controls overall operations of the user terminal device 100 using various programs stored in the storage 130.

In particular, the controller 150 may control the display 120 to display a UI for inputting profile information of a user of the user terminal device 100-1. In this case, the profile information may include at least one of information related to a user which corresponds to contact information, other contact information related to a user which corresponds to contact information, location information related to a user which corresponds to contact information, image information related to a user which corresponds to contact information, and evaluation information related to a user which corresponds to contact information.

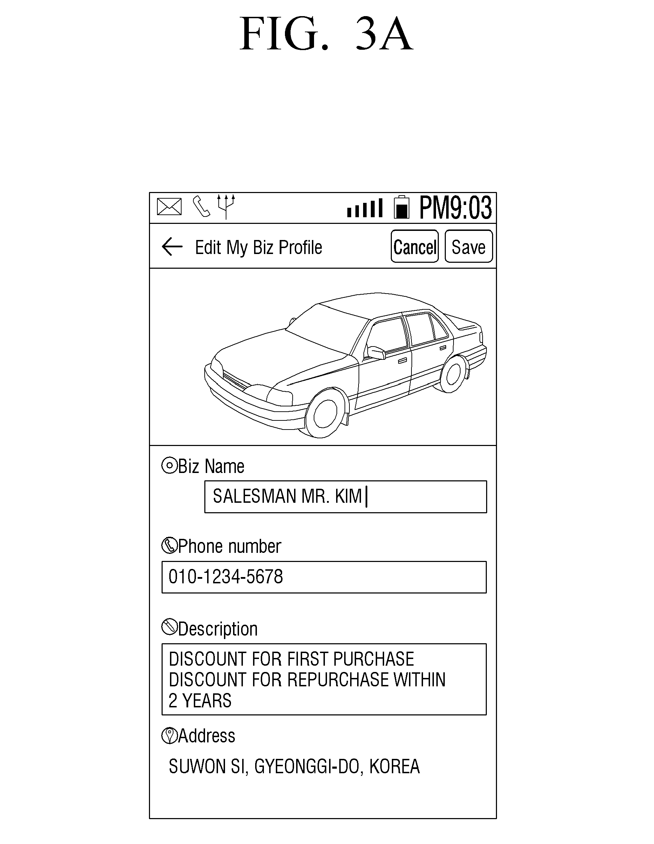

Specifically, the controller 150 may control the display 120 to display a display screen to input profile information related to a user of the user terminal device 100 as illustrated in FIG. 3A. In particular, in response to a user of the user terminal device 100 being a car sales person, the controller 150 may display profile information, such as user information, contact information of the user, car sales information, car agency address information, and a photo of the car, as illustrated in FIG. 3A.

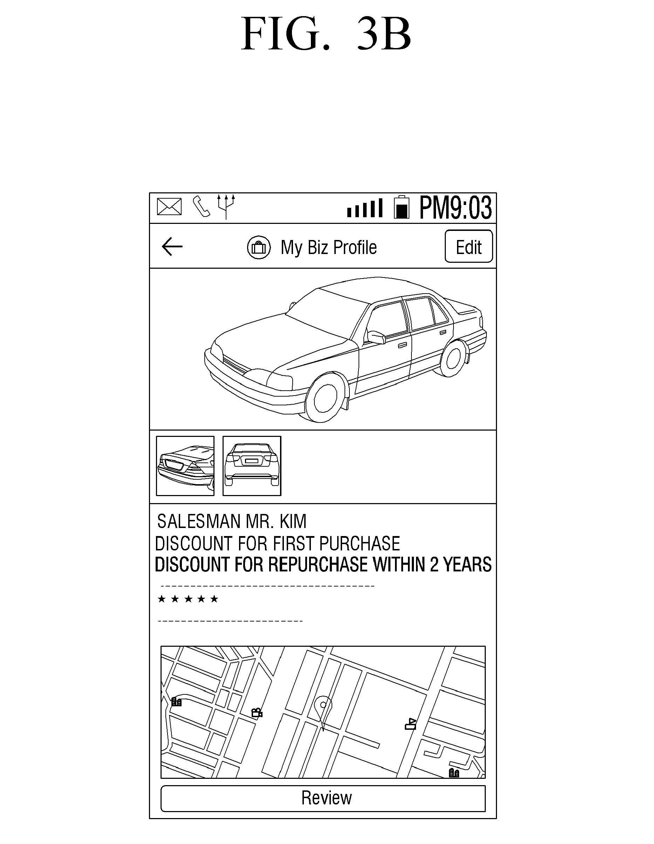

In response to a user command to register profile information being input through the input unit 140, the controller 150 may control the display 120 to display a display screen in order to confirm profile information input from a user, as illustrated in FIG. 3B.

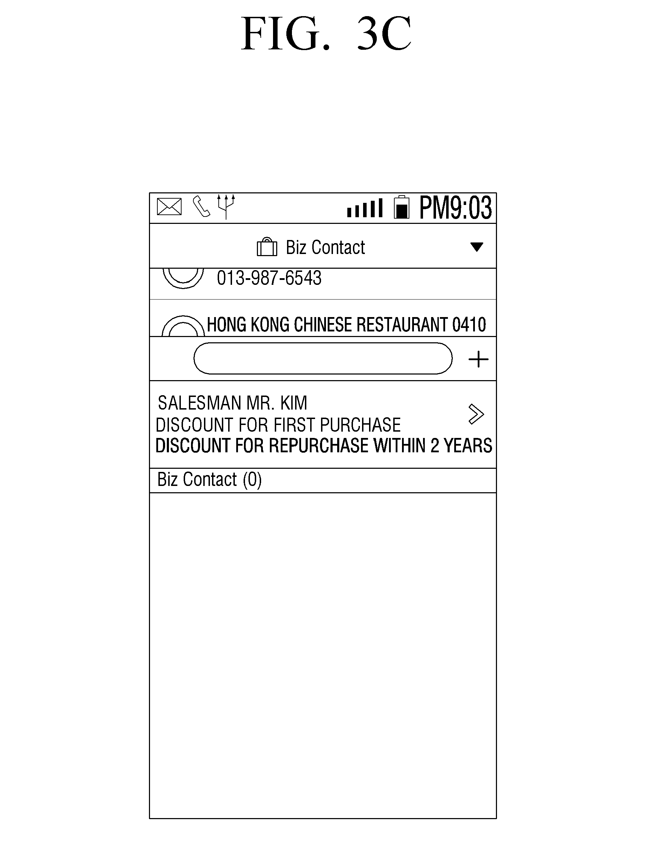

Subsequently, the controller 150 may control the display 120 to display a display screen to confirm a profile information list registered by the user, as illustrated in FIG. 3C.

In response to profile information being registered through a profile information registration UI, as illustrated in FIGS. 3A to 3C, the controller 150 may control the communicator 110 to transmit to the external server 200 the registered profile information. In this case, the profile information may not only include the profile information input through the profile information registration UI but also contact information of the user terminal device 100. The contact information may include at least one of a telephone number, an e-mail address, a home address and a car agency address.

In addition, the controller 150 may control the communicator 110 to receive an alarm message indicating that registration of the profile information is completed from the external server 200, and store the registered profile information in the storage 130.

Further, in response to a user wishing to update profile information, the controller 150 may control the display 120 in order to display a display screen, as illustrated in FIG. 3A in accordance with a user's input. A user may perform an editing operation of profile information through a display screen, as illustrated in FIG. 3A.

As described above, through a profile information registration UI, a user may register his or her profile information in the external server 200. Accordingly, the user may more easily and conveniently provide his or her profile information for the purpose of advertisement and promotion to others.

The controller 150 may control the display 120 to display a UI to register contact information of other user terminal device 100-2.

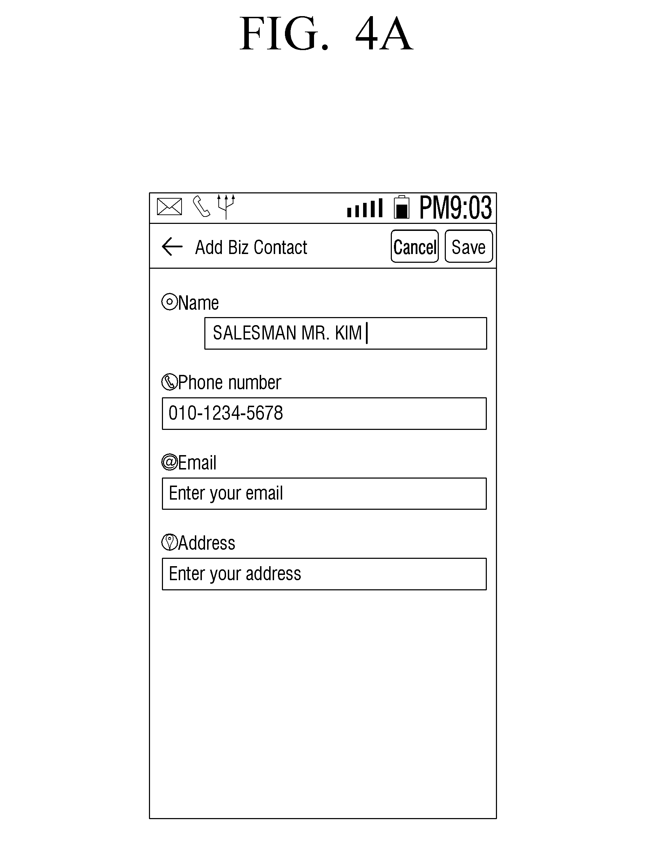

Specifically, the controller 150 may control the display 120 to display a UI to register contact information as illustrated in FIG. 4A. In this case, the UI of FIG. 4A may be a UI to register a user name and contact information of other user terminal devices.

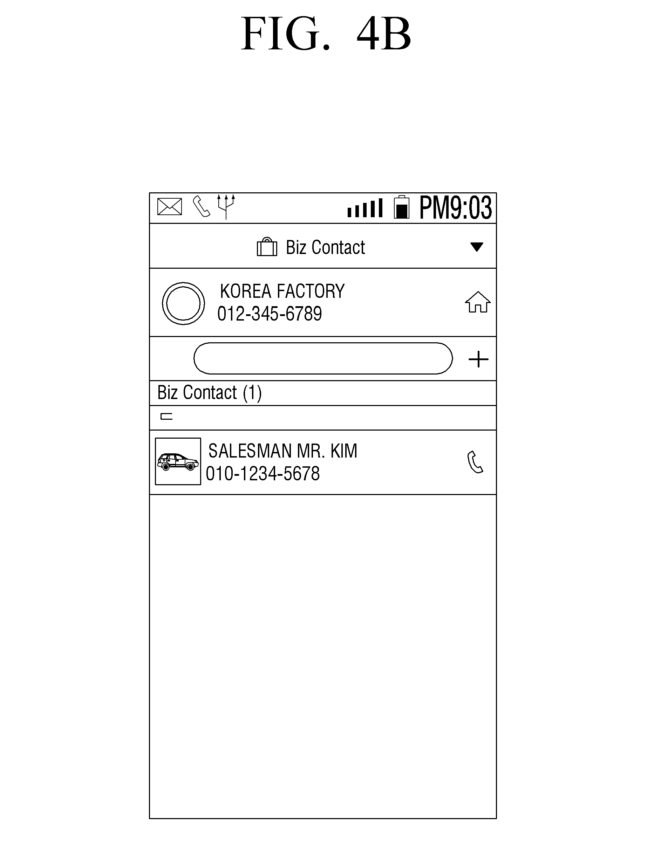

In response to contact information being registered through a UI, as illustrated in FIG. 4A, the controller 150 may control the display 120 to display an address list UI to confirm the registered contact information, as illustrated in FIG. 4B. In this case, the address list UI may display a display item which corresponds to the registered contact information.

In addition, the controller 150 may control the communicator 110 to transmit to the external server 200 an event of registering contact information. The event of registering contact information may include contact information to another user terminal device to be registered.

In response to profile information which corresponds to contact information related to another user terminal device being received from the external server 200, the controller 140 may control the storage 130 to store the registered contact information in association with the profile information.

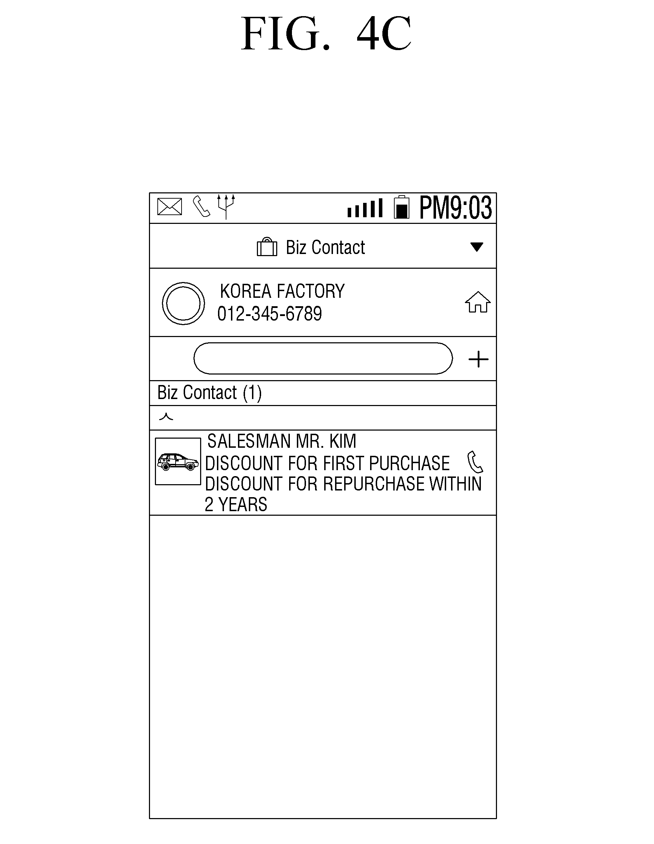

Further, the controller 140 may control the display 120 in order to update a display item which corresponds to registered contact information included in the address list UI. Specifically, a display item prior to profile information being received from the server 200 may display name and contact information which are input directly from a user, as illustrated in FIG. 4B, while a display item subsequent to profile information being received from the server 200 may display user information included in the profile information received from the server 200, as illustrated in FIG. 4C.

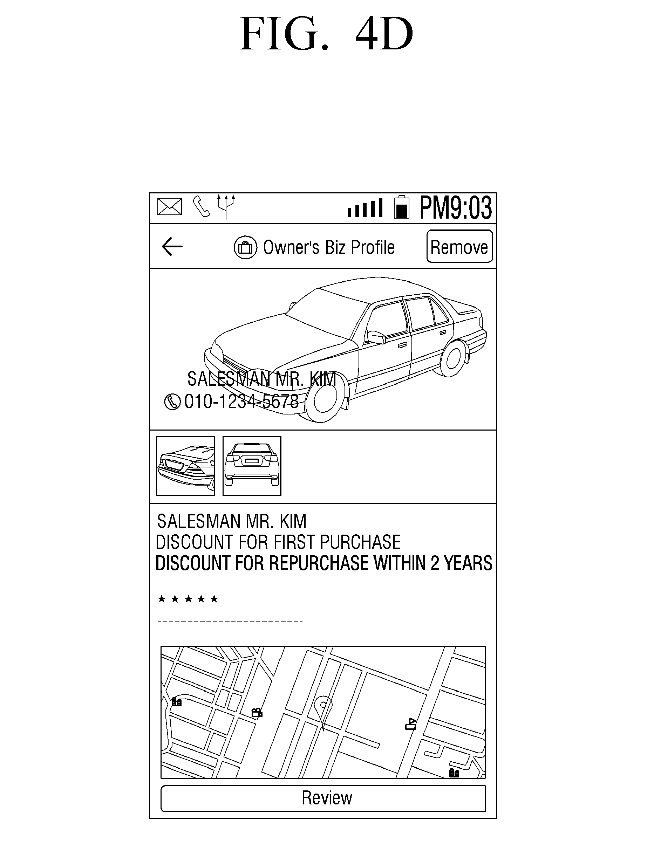

In response to a display item which corresponds to registered contact information being selected while an address list UI is displayed, as illustrated in FIG. 4C, the controller 140 may control the display 120 in order to display a UI which includes profile information, as illustrated in FIG. 4D. The UI which includes the profile information may display profile information such as user information, contact information related to the user, car sales information, car agency address information, and a photo of the car, as illustrated in FIG. 4D.

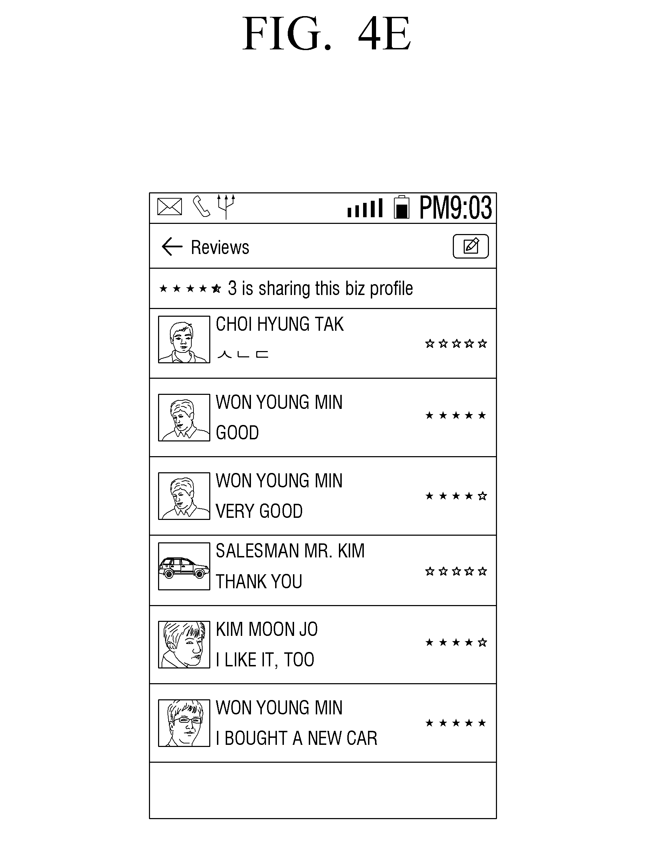

In addition, in response to a user command to confirm reviews regarding registered contact information being input, the controller 150 may control the display 120 in order to display a display screen which includes review information regarding registered contact information, as illustrated in FIG. 4E.

Further, the controller 150 may control the display 120 to further display a recommendation UI to recommend to another user, contact information which corresponds to profile information. A user may recommend to another user, contact information which corresponds to profile information, through the recommendation UI.

As described above, as profile information is automatically synchronized by registering profile information, a user may more easily and conveniently acquire information regarding a user which corresponds to contact information.

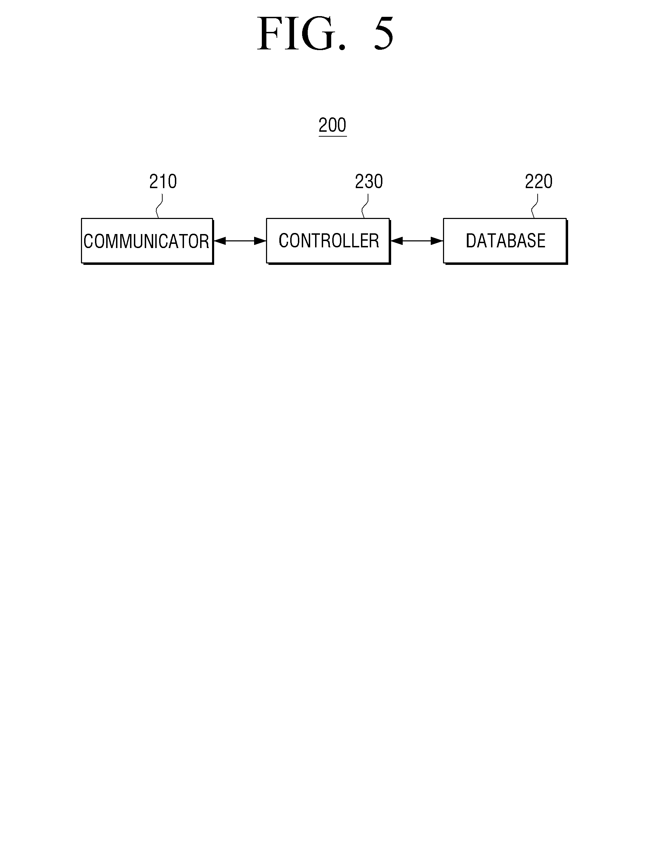

FIG. 5 is a block diagram which illustrates a configuration of the server 200 according to an exemplary embodiment. As illustrated in FIG. 2, the server 200 includes a communicator 210, database 220 and a controller 230.

The communicator 210 performs communication with the external user terminal device using various methods of communication. In particular, the communicator 210 may receive a contact information registration event, a profile information registration event and profile information update event from the user terminal device 100. In addition, the communicator 210 may transmit to the user terminal device 100 profile information related to another user.

The database 220 stores various data. In particular, the database 220 may match contact information with profile information and store the matching information.

The controller 230 controls overall operations of the server 200. In particular, in response to an event of registering profile information being received from the user terminal device 100, the controller 230 may match contact information related to the external user terminal device 100 with profile information and store the matching information in the database 220.

In response to an event of registering contact information being received from another user terminal device, the controller 230 may search whether there is contact information which is the same as contact information received from another user terminal device, from among stored contact information.

In response to there being contact information which is the same as contact information received from another user terminal device, the controller 230 may control the communicator 210 in order to transmit to another user terminal device profile information which corresponds to the contact information.

In response to there being no contact information which is the same as contact information received from another user terminal device, the controller 230 may control the communicator 210 in order to transmit a message informing that profile information matched with contact information is not registered.

In response to an event of updating profile information being received from the user terminal device 100, the controller 230 may update previously-registered profile information in order to updated profile information included in the profile information update event and store the profile information in the database 220.

The controller 230 may control the communicator 210 to transmit the updated profile information to a previously-registered user terminal device.

Through the above-described server 200, profile information may be automatically provided to users in association with contact information.

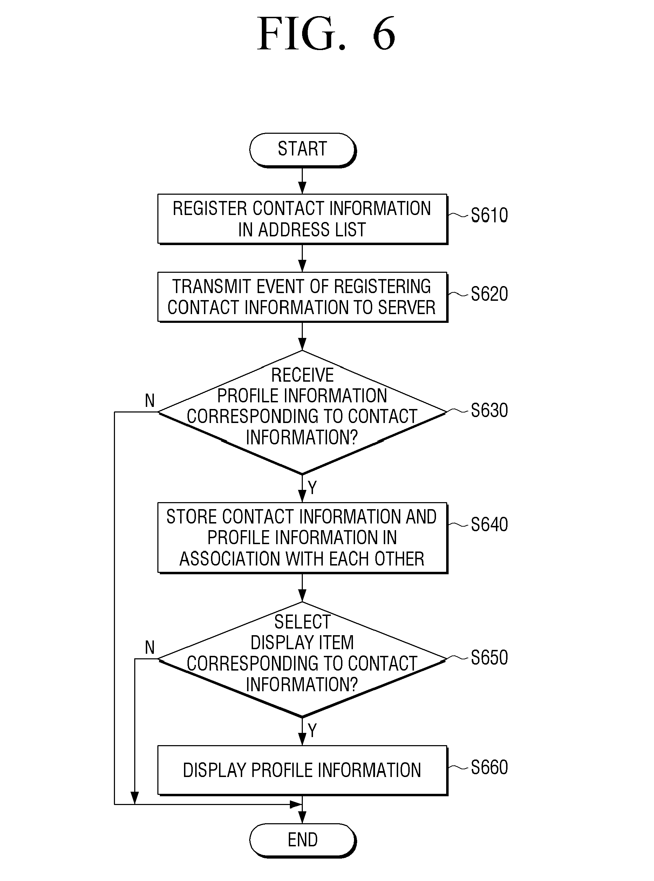

Hereinafter, the method of providing information according to an exemplary embodiment will be described. FIG. 6 is a flowchart provided to explain a method of providing information of the user terminal device 100, according to an exemplary embodiment.

The user terminal device 100 registers contact information in an address list according to a user input (S610). The contact information may be a telephone number of other user's terminal devices.

Subsequently, the user terminal device 100 transmits an event of registering contact information to a server (S620). The contact information registration event may include contact information of other users that the user wishes to register.

The user terminal device 100 then determines whether profile information which corresponds to contact information is received (S630).

In response to profile information which corresponds to contact information being received (S630-Y), the user terminal device 100 stores the contact information and the profile information in association with each other (S640).

Subsequently, the user terminal device 100 determines whether a display item which corresponds to the contact information is selected (S650).

In response to a display item corresponding to the contact information being selected (S650-Y), the user terminal device 100 displays profile information (S660). In this case, the user terminal device 100 may display the profile information using a UI, as illustrated in FIG. 4D.

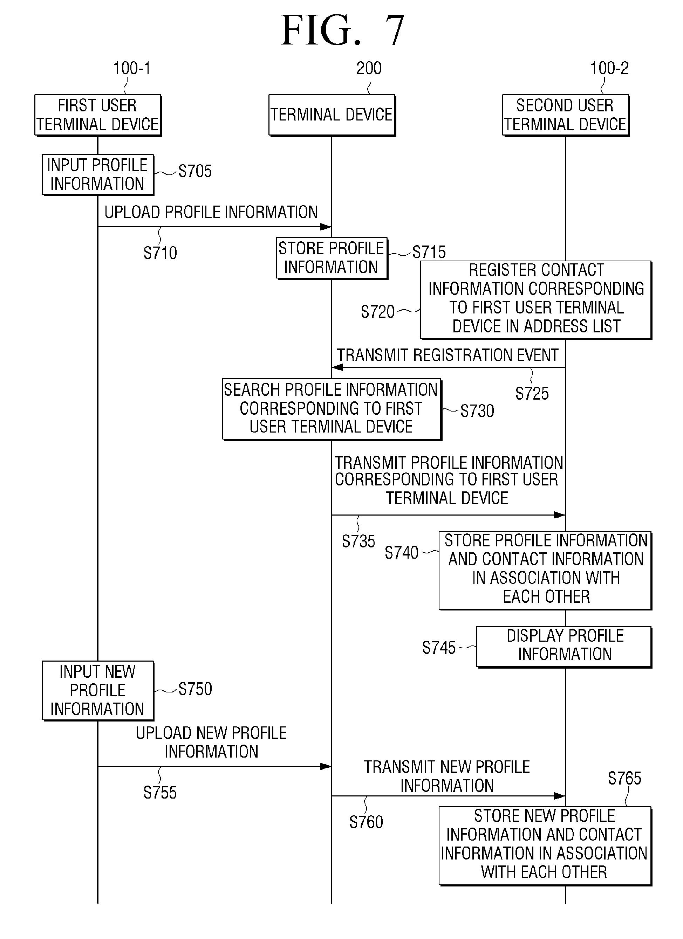

FIG. 7 is a sequence view provided to explain a method of providing information related to an information providing system, according to an exemplary embodiment.

The first user terminal device 100-1 receives profile information (S705). The profile information may include at least one of user information (for example, a name), other contact information related to the user, location information related to the user, image information related to the user, and estimation information related to the user.

Subsequently, the first user terminal device 100-1 uploads the profile information to the server 200.

The server 200 stores the profile information (S715). In this case, the server 200 may match the profile information with contact information and store the matching information in the database.

Meanwhile, the second user terminal device 100-2 registers contact information which corresponds to the first user terminal device(100-1) according to a user input (S720).

The second user terminal device 100-2 transmits an event of registering contact information to the server 200 (S725).

The server 200 searches profile information which corresponds to the first user terminal device 100-1 (S730). Specifically, the server 200 may search whether there is profile information having the same contact information as the contact information included in the registration event received from the second user terminal device 100-2.

The server 200 transmits profile information which corresponds to the first user terminal device 100-1 to the second user terminal device 100-2 (S735).

The second user terminal device 100-2 stores the received profile information and the contact information in association with each other (S740).

Subsequently, the second user terminal device 100-2 displays the profile information according to a user command (S745). Specifically, in response to a display item which corresponds to the first user terminal device 100-1 being selected while an address list UI is displayed, the second user terminal device 100-2 may display the profile information which corresponds to the first user terminal device 100-1.

Afterward, the first user terminal device receives new profile information according to a user's input (S750).

The first user terminal device 100-1 uploads the new profile information to the server 200 (S755). The first user terminal device 100-1 may generate a profile information update signal which includes the new profile information and transmit the signal to the server 200.

The server 200 transmits the new profile information to the second user terminal device 100-2 (S760).

The second user terminal device 100-2 stores the new profile information and contact information in association with each other (S765). That is, the second user terminal device 100-2 may associate the existing contact information of the first user terminal device 100-1 with the new profile information, and store the same.

As described above, according to an exemplary embodiment, a user may easily and conveniently acquire information regarding a user which corresponds to contact information. In addition, a user who provides contact information may more easily and conveniently provide his or her profile information for the purpose of advertisement and promotion.

The method of providing information of a user terminal device according to various exemplary embodiments may be implemented as a program and provided in a display apparatus. In addition, a non-transitory computer readable storage medium where the program is stored, may be provided. The non-transitory computer readable storage medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disc™, USB, memory card, and ROM and provided therein.

The foregoing embodiments and advantages are merely exemplary and are not to be construed as limiting. The teachings of the exemplary embodiments can be readily applied to other types of apparatuses. In addition, the description of the exemplary embodiments is intended to be illustrative, and not to limit the scope of the claims; and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing information in a user terminal device, the method comprising:
registering contact information in an address list according to a user's input;
transmitting an event of registering the contact information to an external server;
when profile information corresponding to the contact information is received from the server, storing contact information registered in the address list and the profile information in association with each other; and
when a display item corresponding to the contact information is selected while the address list is displayed, displaying the profile information.

2. The method as claimed in claim 1, further comprising:
when a user corresponding to the contact information updates new profile information in the server, receiving the new profile information from the server; and
updating the new profile information to the pre-stored profile information .

3. The method as claimed in claim 1 or claim 2, wherein the displaying comprises displaying a UI for recommending to another user contact information corresponding to the profile information.

4. The method as claimed in one of claim 1 to claim 3, wherein the profile information includes at least one of information of a user corresponding to the contact information, another contact information of a user corresponding to the contact information, location information of a user corresponding to the contact information, image information of a user corresponding to the contact information, and estimation information of a user corresponding to the contact information.

5. The method as claimed in one of claim 1 to claim 4, wherein the contact information is at least one of a telephone number, an e-mail address and address information.

6. A user terminal device, comprising:
a communicator configured to perform communication with an external server;
a storage configured to store contact information;
a display configured to display an image;
an input unit configured to display a user command; and
a controller configured to, when contact information is registered in an address list according to a user's input which is input through the input unit, control the communicator to transmit an event of registering the contact information to an external server, when profile information corresponding to the contact information is received through the communicator, control the storage to store contact information registered in the address list and the profile information in association with each other, and when a display item corresponding to the contact information is selected while the address list is displayed, control the display to display the profile information.

7. The device as claimed in claim 6, wherein the controller, when a user corresponding to the contact information updates new profile information in the server, controls the communicator to receive the new profile information from the server and controls the storage to update the new profile information to the pre-stored profile information .

8. The device as claimed in claim 6 or claim 7, wherein the controller controls the display to further display a UI for recommending to another user contact information corresponding to the profile information.

9. The device as claimed in one of claim 6 to claim 8, wherein the profile information includes at least one of information of a user corresponding to the contact information, another contact information of a user corresponding to the contact information, location information of a user corresponding to the contact information, and image information of a user corresponding to the contact information.

10. The device as claimed in one of claim 6 to claim 9, wherein the contact information is at least one of a telephone number, an e-mail address and address information.
